# EUROPEAN PATENT SPECIFICATION

(11) **EP 2 291 433 B1**
(45) Date of publication and mention of the grant of the patent: **24.02.2016**
(21) Application number: 09769305.5
(22) Date of filing: 24.06.2009
(51) Int. Cl.: C08G 63/20, C08G 63/48, C09D 167/08

(54) **MODIFIED POLYESTER RESIN**
MODIFIZIERTES POLYESTERHARZ
RÉSINE DE POLYESTER MODIFIÉE

(30) Priority: 24.06.2008 EP 08158873
(43) Date of publication of application: 09.03.2011
(73) Proprietor: DSM IP Assets B.V., 6411 TE Heerlen (NL)
(72) Inventor: URMANOVA, Antonia, NL-8022 AW Zwolle (NL); MISEV, Tosko Alexandar, NL-8022 AW Zwolle (NL); HIERDEN VAN, Menno Ferdinand, NL-8022 AW Zwolle (NL); WESTERHOF, Wilhelmina, NL-8022 AW Zwolle (NL)
(74) Representative: Verhaegen, Ilse Maria M.
(86) International application number: PCT/EP2009/057926
(87) International publication number: WO 2009/156457

(56) References cited:
- US-A- 5 055 548
- US-A1- 2002 137 878
- DATABASE CA [Online] CHEMICAL ABSTRACTS SERVICE, COLUMBUS, OHIO, US; 17 April 2001 (2001-04-17), MORIMOTO, OSAMU ET AL: "Storage-stable and retort treatment-resistant polyester coating compositions for 3-piece can interiors and coated metal plates therefrom" XP002541276 retrieved from STN Database accession no. 2001:270555 -& JP 2001 106968 A (TOYOBO CO., LTD., JAPAN) 17 April 2001 (2001-04-17)
- DATABASE CA [Online] CHEMICAL ABSTRACTS SERVICE, COLUMBUS, OHIO, US; 17 April 2001 (2001-04-17), MORIMOTO, OSAMU ET AL: "Storage-stable and retort treatment-resistant polyester coating compositions for 3-piece can interiors and coated metal plates therefrom" XP002541278 retrieved from STN Database accession no. 2001:269409 -& JP 2001 106969 A (TOYOBO CO., LTD., JAPAN) 17 April 2001 (2001-04-17)
- DATABASE CA [Online] CHEMICAL ABSTRACTS SERVICE, COLUMBUS, OHIO, US; 14 September 2006 (2006-09-14), TANAKA, HIDEKI ET AL: "Copolymerized polyester resins, method for producing same, and resin compositions containing copolymerized polyester resins and their use in hot melt adhesives, toners or coatings for metals" XP002541277 retrieved from STN Database accession no. 2006:944489 -& WO 2006/095901 A1 (TOYO BOSEKI [JP]; TANAKA HIDEKI [JP]; HOTTA YASUNARI [JP]; KOMATSU KAZ) 14 September 2006 (2006-09-14)

## Description

The invention relates to a modified polyester resin, a method for preparing such a modified polyester resin, a coating composition containing such a modified polyester resin and a substrate fully or partially coated with said composition. The modified polyester resin may also be used in liquid paint for thermoset applications.

Liquid paints for thermoset applications generally include a polyester resin, a crosslinking agent, solvents and other conventional ingredients like pigments, inert fillers, flow-promoting and matting agents.

Polyester resins are usually obtained by reacting polyfunctional acids and polyfunctional alcohols together in a polycondensation reaction. At the end of the polycondensation reaction and depending on the exact application, the obtained polyester resin is in the most cases dissolved in organic solvent or water, or in mixtures thereof.

The cured coatings desirably should exhibit a broad range of protective properties like one or more of: excellent hardness, flexibility, processability, resistance against solvent, stain, corrosion and/or dirt pick up, hydrolytic stability against humidity and/or sterilization.

However, many known polyesters designed to meet hardness, flexibility, solvent resistance and/or other requirements are mostly unstable and crystallise out of the liquid medium in a relatively short time. Especially polyester resins containing terephthalic acid in the composition are prone to undergo crystallisation, due to the specific structure of this specific acid that tends to induce crystallisation.

WO 01/25309 and US 2002/0137878 describe a process for producing an alkyd resin having an oil length of 30-70%, comprising dissolving polyester resin whose chief starting material is terephthalic acid and which has been recovered from waste materials and regenerated, in an alcohol mixture of tetra- or higher hydric alcohol with tri- or lower polyhydric alcohol, depolymerizing the same in the presence of a depolymerization catalyst, and then adding thereto a polybasic acid component and a fatty acid component to effect an esterification reaction. Experimental results show that compositions comprising regenerated PET had good appearance of resin solution whereas for compositions with terephthalic acid turbidity occurred due to poor solubility.

US 5055548 describes a process for the production of a solvent borne alkyd resin which comprises reacting: (a) an unsaturated fatty acid; (b) a polyol; (c) a dibasic carboxylic acid; and (d) a 21-carbon dicarboxylic acid having a specified structure.

WO 00/23530 describes thermosetting powder coating systems comprising at least one carboxyl functional polyester resin and a curing agent, in which the polyester resin consists of dicarboxylic acid and diol difunctional monomers (i.e. the polyester resin is linear), in which the polyester resin comprises at most 80 mol% of isophthalic acid and at least 20 mol% of at least one other dicarboxylic acid, and at least 50 mol% of at least one branched aliphatic diol with 4 to 12 carbon atoms.

US 5168028 relates to a toner comprising polyester based inter alia on terephthalic acid, fatty acids and alcohols such as 1,2-propylene glycol.

US 4686275 describes saturated linear resin comprising a polyol, a dibasic acid and from about 4% to about 12% by weight solid of C₈-C₁₈ carbon chain oil function in the form of fatty acid or derivative thereof.

US 4181638 describes hydroxy-functional polyester being a condensation product obtained by heating of: a) an aliphatic diol having about 4 to about 9 carbon atoms, b) a cyclic carboxylic acid or anhydride thereof and c) a mono carboxylic fatty acid having between about 8 to about 20 carbon atoms. The polyester functionality is between about 1.6 to about 1.8 and the mol ratio of b) to c) is between about 4:1 and about 1.5:1.

US 4540751 describes polyester resins produced by reacting a mixture comprising: a) about 3 to about 8 weight % saturated fatty acid having 8 to 18 carbon atoms, b) about 40 to about 50 weight % polyol and c) about 45 to about 55 weight % polycarboxylic acid, said polyester resin having a hydroxyl number of from about 75 to about 175.

US 4520188 describes a polyester based on the combination of glycols consisting of a neopentyl glycol and 1,4-cyclohexanedimethanol copolymerized with dicarboxylic acids and crosslinked with melamine resin. The coating is said to resist crystallization. However, the polyester polymer disclosed in US 4520188 is not entirely resistant to crystallization and exhibits instability over time in respect to crystallizing out of an organic solvent solution.

US 4968775 describes thermosetting polyester polymers resistant to crystallization and useful as a binder in a coil coating. The polyester can be crosslinked upon heating with an alkylated aminoplast crosslinker. The polyesters contained a non-symmetrical glycol reactant comprising 2-methyl-1,3-propane diol in conjunction with other glycols and dicarboxylic acid reactants to improve the resistance of the polyester to crystallization.

Terephthalic acid is often one of the aromatic difunctional acids of choice in preparing polyester resins, because it provides improved hardness and greater damage resistance to the cured coating compared to other aromatic difunctional acids. However, terephthalic acid (TPA) has the following major disadvantages: 1) poor solubility in the reaction medium during the synthesis of the polyester, which hinders its reactivity with other components; 2) the polyester resin containing high amount of terephthalic acid is poorly soluble in common organic solvents; and 3) the polyester resin crystallizes out of solution in a relatively short period of time. The same disadvantages 2) and 3) are also present when TPA derivatives as defined herein are used. For instance, the dimethyl and dichloride derivatives of TPA are soluble in the reaction medium. However the obtained polyesters will have poor solubility and crystallization problems.

This usually limits the use of terephthalic acid, even though using more terephthalic acid would be advantageous since terephthalic acid is the most cost effective and efficient difunctional acid for improving hardness, processability and the protective properties of coatings.

Furthermore, when polyester compositions comprise a mixture of terephthalic acid with other carboxylic acids, during the synthesis the terephthalic acid will react last as an acid component due to its bad solubility. Terephthalic acid also requires a higher reaction temperature compared to the other carboxylic acids. That limits its use in polymers comprising high amount (more than 10%) of three or higher functional compounds like for example the alkyd type of resins. According to US 5005548 for instance, in order to obtain suitable alkyd resins that impart sufficient coating properties, the alkyd constant (K) of the resin (which is equal to the total moles of starting material divided by the total equivalents of acid present) should be within the range K=1.0 ± 0.05. The addition of 10% or more of terephthalic acid to the composition of alkyd resin with a K of even broader range such as K=1.0 ± 0.1 will however result in gelation of the reaction product during the synthesis, as shown herein by the experimental results.

With wishing to be limited by any mechanism described herein, a possible reason for the low solubility of terephthalic acid based polyesters in organic solvents is that terephthalic acid in combination with commonly used glycols such as: neopentyl glycol (NPG), ethylene glycol (EG) and hexane diol (HD) may form (semi)crystalline segments in the polyester resin. Another possible explanation is that resins containing symmetrical monomers such as for example terephthalic acid, neopentyl glycol, ethylene glycol or hexane diol, even when they are slightly branched have a high level of molecular order with an increased hydrogen bonding interaction between the polyester chains that could render the modified polyester insoluble or poorly soluble in organic solvents.

The bad solubility of the polyester resin containing terephthalic acid in an organic solvent can lead, amongst others, to the following disadvantages: highly viscous solutions, low solid content, poor dispersion of the inorganic paint components, inconsistent film properties, hazy appearance of the resultant coating, etc. Consequently, conventional polyester resins prepared with terephthalic acid have been a compromise at best regarding solubility and performance, with notable deficiencies.

For this reason, difunctional acids such as isophthalic acid and phthalic acid, often in combination with (cyclo)aliphatic acids, are mostly used to prepare solvent borne polyesters. The main disadvantage of the coatings made of polyester resins comprising mostly isophthalic acid is their inferior flexibility when compared to the flexibility of coatings made of modified polyester resins based on terephthalic acid. Phthalic acid anhydride may also be used to prepare modified polyesters, however the main disadvantage of phthalic acid anhydride is its tendency to sublime during synthesis of the modified polyester resin and the bad flexibility of the coatings comprising phthalic acid anhydride based polyester resins. The main disadvantage of polyesters comprising high amount of (cyclo)aliphatic acids is their relatively low glass transition temperature. The resulting coatings have poor blocking resistance and insufficient hardness.

There remains a need for an improved polyester resin which should impart to the cured coating improved hardness and damage resistance of the cured coating in combination with an improved bending flexibility, without the polyester resin having the tendency to crystallize out from the solution. The polyester resin should also be easily soluble in commonly used organic solvents or dispersible in water borne compositions.

It is the object of the present invention to solve one or more of the problems described herein, more preferably to provide a modified polyester resin that has the above mentioned properties and which overcomes the disadvantages mentioned before, especially improved solubility in a liquid medium.

Surprisingly we have found that according to the present invention such a modified polyester resin is as disclosed herein and as described in the claims; said modified polyester resin may be obtained and/or obtainable by the reaction of components comprising:
a) ≥10 wt%, preferably ≥ 30 wt% and most preferably ≥ 40 wt% of at least one difunctional acid selected from the group consisting of terephthalic acid, terephthalic acid dichloride, di-methanol terephthalic acid and mixtures thereof;
b) 0 to 30 wt% of difunctional acids other than a);
c) ≥ 10 wt% of at least one difunctional asymmetric alcohol;
d) 0 to 30 wt% of at least one difunctional alcohol other than c);
e) ≥ 8 wt% of at least one fatty acid and/or fatty acid derivative;
f) 0.1 to 10 wt% of at least one polyol and/or a polyacid and/or their corresponding anhydride, having a functionality ≥ 3;
g) 0 to 20 wt% of at least one monofunctional component selected from the group consisting of acid, epoxy, alcohol and mixtures thereof.

Preferably components a) + b) + c) + d) + e) + f) + g) add up to 100 wt% of the modified polyester resin.

For clarity, the terms: (mono- or difunctional) acid, terephthalic acid derivative, fatty acid, fatty acid derivative, alcohol, polyol, polyacid, anhydride, glycol, epoxy, crosslinking component and crosslinker are intended to cover the singular as well as the plural. Unless otherwise specified the term terephthalic acid as used herein as well as terephthalic acid (TPA) denotes terephthalic acid derivatives; such as esters, anhydrides and/or salts of TPA; for example terephthalic acid dichloride and dimethanol terephthalic acid.

The advantageous properties of a modified polyester resin according to the invention are a better solubility, improved miscibility towards different liquid media and resistance to crystallisation out of solutions.

Additionally, due to the increased amount of terephthalic acid in the resin, the resulting coatings are expected to have improved hydrolytical stability (boiling water, humidity, sterilization), flexibility, stain and corrosion resistance as compared to resins based on isophthalic and phthalic acid or having less than 10% TPA.

After preparation the modified polyester resin is usually dissolved in a liquid medium. By liquid medium herein is meant water, an aqueous medium containing further ingredients dissolved in it, an organic solvent and/or organic (co-)solvent or even a mixture of an aqueous and organic medium that may be partially or totally soluble in water.

If desired the modified polyester resin according to the invention can be used in combination with other polyesters and/or polymer compositions which are not according to the invention to obtain mixtures with improved solubility and resistance to crystallinity.

Preferred coating compositions of the invention exhibit one or more of the following properties: are substantially haze free (e.g. as measured by any conventional method); and/or are substantially free of crystalline material.

The Tg of a modified polyester resin according to the invention herein stands for the glass transition temperature and is well known to be the temperature at which a polymer changes from a glassy, brittle state to a rubbery state. Tg values of polymers may be determined experimentally using techniques such as Differential Scanning Calorimetry (DSC), for example a DSC 821-E from Mettler Toledo. The DSC-measurement may be performed with a heating rate of 5°C/min.

Preferably the Tg of the modified polyester resin is ≥ -50 °C, more preferably the Tg is ≥ -30 °C, even more preferably the Tg ≥ -15 °C and most preferably the Tg is in a range of from 0 to 100 °C.

The weight average molecular weight (Mw) or number average molecular weight (Mn) of the modified polyester resin may be determined by using gel permeation chromatography (GPC) using polystyrene as standards and THF as solvent.

Preferably the modified polyester resin has a number average molecular weight Mn in the range of from 1,000 to 10,000 g/mol, preferably 2,000 to 8,000 g/mol and most preferably 2,500 to 7,000 g/mol.

The weight average molecular weight Mw of the modified polyester resin is preferably in the range of from 1,000 to 100,000 g/mol, more preferably from 1,000 to 50,000 g/mol and most preferably from 1,000 to 20,000 g/mol.

Preferably the acid value of the modified polyester resin according to the invention is in a range of from 0 to150 mg KOH/g, more preferably 2 to 100 mg KOH/g and most preferably 2 to 75 mg KOH/g.

Preferably the hydroxyl number of the modified polyester resin according to the invention is in a range of from 2 to 250 mg KOH/g, more preferably 15 to 150 mg KOH/g and most preferably 15 to 100 mg KOH/g.

Component a) is chosen from at least one difunctional acid selected from the group consisting of terephthalic acid, terephthalic acid dichloride, di-methanol terephthalic acid and mixtures thereof.

Preferably the modified polyester resin comprises ≥ 15 wt%, more preferably ≥ 20 wt%, even more preferably ≥ 25 wt% and most preferably ≥ 30 wt% of component a).

Preferably the modified polyester resin comprises ≤ 90 wt%, more preferably ≤ 80 wt% and most preferably ≤ 70 wt% of component a).

Preferably the modified polyester resin comprises ≥ 35 wt%, more preferably ≥ 50 wt% of component a) from the total difunctional acid content a) + b). The advantage of having more component a) by weight% than weight% of other diacids as described above is an improvement in hardness and chemical resistance.

Suitable difunctional acids for component b) other than described under component a) are aromatic or (cyclo)aliphatic dicarboxylic acids and hydroxyacids. Examples of such acids that can be used in combination with component a) for preparing the modified polyester resin are selected from the group consisting of: isophthalic acid, ortho-phthalic acid, succinic acid, adipic acid, fumaric acid, maleic acid, sebacic acid, itaconic acid, cyclohexane dicarboxylic acid (CHDA), hexahydrophthalic acid, tetrahydrophthalic acid, decane dicarboxylic acid, azelaic acid, 5-t-butylisophthalic acid, lactic acid, hydroxybutyric acid, 3-hydroxypropionic, salicylic acid their acid anhydrides, their methyl esters, their isomers and any mixtures thereof.

Surprisingly, it was found that the solubility and the resistance to crystallisation of terephthalic acid (and/or its derivatives) based resins can be significantly improved if an asymmetric difunctional alcohol (i.e. component c) is incorporated in the modified polyester resin. By asymmetric alcohol hereby is meant an alcohol containing at least a three substituted carbon atom (C') and another one hydrogen atom. Preferably, component c) is a difunctional asymmetric alcohol according to formula (I) and/or (II): 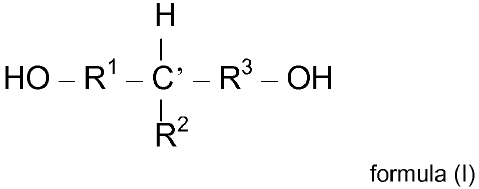 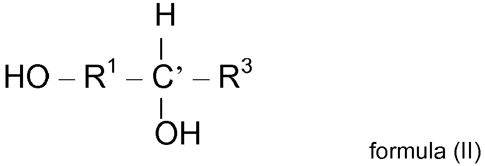 where R¹, R², R³ may, independently of one another, be the same or different C₁ to C₂₀ alkyl or a cycloalkyl. Here by Cₙ (like for example C₂₀) is meant a total of n carbon atoms. Preferably R¹, R², R³ are C₁ to C₅ alkyl. Preferably R² is -CH₃.

Examples of such asymmetric difunctional alcohols are aliphatic glycols selected from the group consisting of 1,2-propylene glycol (PG), 2-methyl-1,3-propanediol (MP-diol), 1,2-butanediol, 1,3-butanediol, 2,2,4-trimethyl -1,3-pentanediol, 3-methyl-1,5 pentanediol (MPD) and mixtures thereof.

Preferably the three substituted carbon atom of component c) is substituted by a secondary OH functional group. Preferably such secondary OH functional group substituted asymmetric difunctional alcohols are selected from the group consisting of 1,2-propylene glycol (PG), 1,2-butanediol, 1,3-butanediol, 2,2,4-trimethyl -1,3-pentanediol, and mixtures thereof.

Preferably the modified polyester resin comprises ≤ 50 wt% of component c). Preferably the modified polyester resin comprises ≥ 15 wt% of component c). Preferably the modified polyester resin comprises ≥ 50 wt% of component c) by weight of the total difunctional alcohol content (i.e. components c) + d)). The advantage of having more of component c) by weight % than other difunctional diols as described above is an improved solubility of the polyester resin in water and solvent.

Examples of suitable diols for component d) other than component c) which can be used in combination with asymmetric glycols for preparing the modified polyester resin according to the invention are ethylene glycol, diethylene glycol, 1,3-propylene glycol, 1,4-butanediol, 1,6-hexanediol, neopentyl glycol, 2-ethyl-2-butyl-1,3-propanediol, hydroxypivalic neopentyl glycol ester, tricyclodecane dimethanol, 1,4-cyclohexane dimethanol, bisphenol A and hydrogenated bisphenol A.

More surprisingly, the solubility of terephthalic acid (and/or its derivatives) based modified polyester resins was further improved by the addition of at least 8 wt% of fatty acids and/or fatty acid derivatives (component e) in the resin composition. The obtained modified polyester resin has not only excellent resistance to crystallization but also improved solubility in terms of significantly improve miscibility and solvent acceptance especially towards aromatic hydrocarbons such as solvent naphtha.

Although the reason for this improved solubility is not clearly understood, one theory (to which we do not wish to be bound) could be that the addition of fatty acid and/or fatty acid derivatives reduces the hydrogen bonding interactions between modified polyester resin molecules and improves the miscibility between the modified polyester resin and the liquid medium.

The fatty acid used in the preparation of the modified polyester resin according to the invention will generally be a fatty acid having from C₁₀ to C₃₆ carbon atoms and preferably from C₁₂ to C₃₆ carbon atoms. In general, mono- or polyfunctional both saturated and unsaturated fatty acids or their derivatives or mixtures of any of them can be used to obtain the fatty acid modified polyester resin according to the invention.

Examples of suitable saturated aliphatic fatty acids include for example lauric acid, myristic acid, palmitic acid and stearic acid. Examples of suitable unsaturated fatty acids include dehydrated castor oil fatty acid, sunflower fatty acid, linoleic acid and/or linolenic acid. Examples of useful natural oil fatty acids are tall oil fatty acid, sunflower oil fatty acid, corn oil fatty acid, cottonseed oil fatty acid, peanut oil fatty acid, linseed oil fatty acid, soybean oil fatty acid, rapeseed oil fatty acid, rice bran oil fatty acid, safflower oil fatty acid and/or sesame oil fatty acid.

Example of polyfunctional fatty acids are di-carboxylic fatty acids such as tetradecanedioic acid, pentadecanedioic acid and hexadecanedioic acid; hydroxy-fatty acids like hydroxystearic and ricinoleic acid, fatty acids dimers and fatty acids trimers.

By fatty acid derivative is hereby meant a mono- or polyfunctional derivative of the fatty acids as for example listed above, derivatives being for example a fatty acid ester, fatty acid chloride, fatty acid anhydride, fatty acid triglyceride or fatty acid Diels-Alder adducts with maleic acid, acrylic acid, itaconic acid or abietic acid (rosin). Mixtures of such derivatives with each other or with fatty acids are also considered fatty acid derivatives.

Preferably the modified polyester resin comprises ≥ 10 wt% and more preferably ≥ 15 wt% of component e). Preferably the modified polyester resin comprises ≤ 30 wt%, more preferably ≤ 25 wt% and most preferably ≤ 20 wt% of component e).

It was found that to prevent gel formation during the synthesis of the modified resin according to the invention, 10 wt% or less of polyfunctional components f) type of acid or polyols with functionality ≥ 3 must be added to the polyester composition. The modified polyester resin according to the invention is thus a (slightly) branched polyester resin as component f) acts as a branching agent, which improves the solubility of the polyester resin of the invention as compared with linear polyester resins. By functionality ≥ 3 of component f) herein is meant 3 or more reactive functional groups that can take part in the polymerisation reaction. Preferably the functionality of the component f) is selected from the group of -OH, -NH₂ and -COOH and mixtures thereof; and more preferably from the group of -OH and/or-COOH.

Suitable polyols having a functionality ≥ 3 (component f) for preparing the modified polyester resin according to the invention include but are not limited to trimethylolpropane, trimethylolethane, glycerol, pentaerythritol, sorbitol and mixtures thereof.

Component f) also includes as polyacids trimellitic acid, pyromellitic acid and their anhydrides. Preferably trimellitic acid and/or its anhydride are used.

Component f) also include polyfunctional acids with total functionality ≥3 containing also different functional groups. For example component f) may be selected from the group consisting of citric acid, tartaric acid, aspartic acid, glutamic acid, shellolic acid, jalaric acid and mixtures thereof.

Preferably the modified polyester resin comprises ≤ 8 wt% of component f). Preferably the modified polyester resin comprises ≥ 1%, preferably more than 3 wt% of component f). Preferably component f) is ≤ 30 wt% from the total polyol content.

Additionally also monofunctional acids, monofunctional epoxies and/or monofunctional alcohols (component g) may be added to prepare a modified polyester resin according to the invention.

Suitable monofunctional acids for preparing the modified polyester resin according to the invention include but are not limited to (cyclo)aliphatic and (saturated or unsaturated) substituted aromatic acids selected from the list of levulinic acid, abietic (rosin) acid, t-butyl benzoic acid, benzoic acid or cinnamic acid or other saturated or unsaturated substituted aromatic acids and mixtures thereof. By (cyclo)aliphatic herein is meant aliphatic and/or cycloaliphatic.

Suitable monofunctional epoxies for preparing the modified polyester resin according to the invention include but are not limited to neodecanoic acid 1,2-epoxypropyl ester, 1,2-epoxy-3-phenoxypropane and mixtures thereof.

Suitable monofunctional glycols for preparing the modified polyester resin according to the invention include but are not limited to 2-ethylhexanol, octanol nonanol, capric, mystryl, cetyl and isostearyl alcohols and mixtures thereof.

Preferably the modified polyester resin comprises ≤ 20 wt%, more preferably ≤ 15 wt% and most preferably ≤ 10 wt% of component g).

The modified polyester resin according to the invention can be produced by polycondensation reaction in an esterification or a transesterification reaction comprising a single or multiple reaction steps. Preferably the modified polyester resin according to the invention is prepared by bulk synthesis polycondensation reaction.

The polycondensation reaction of at least components a) to g) preferably takes place under a nitrogen atmosphere at temperatures in a range typically of from 180 to 260 °C. Catalysts such as dibutyl tin oxide, butyl chlorotin dihydroxide, butyl stannoic acid or tetrabutoxytitanate and antioxidants such as phosphorous acid, trisnonylphenylphosphite or triphenylphosphite can be added as additives. During the reaction water is released and is preferably removed through distillation. The desired degree of esterification can be achieved by applying azeotropic distillation and/or vacuum distillation.

The reaction results in a modified polyester resin that can subsequently be dissolved, dispersed or emulsified by any means of mixing in a liquid medium such that the desired solids content is obtained. The liquid medium can be added immediately after the modified polyester resin synthesis.

Preferably the modified polyester resin according to the invention is substantially soluble in the liquid medium, whether an organic solvent (crude oil or bio-based) or mixture of organic solvents, water, mixture of water, neutralizing agent and/or organic co-solvent. By substantially soluble herein is meant that the solution of the resin according to the invention is visibly clear / transparent. By bio-based organic solvent herein is meant a solvent that is composed, in whole or in significant part, of biological products or renewable domestic agricultural materials (including plant, animal, and marine materials) or forestry materials.

Examples of suitable organic solvents which may be used include aromatic hydrocarbon solvents (for example the solvent 'naphtha' types), N-methylpyrrolidone, xylene, propylene glycol monomethylether, dibasic ester, isophoron, esters of glycol ethers, such as for example methoxypropylacetate or ethylene-propylene glycol acetate; ethyl ethoxypropionate, glycol ethers such as butyl glycol, and/or their bio-based equivalents and any mixture thereof.

Preferably aromatic hydrocarbons, glycols, ethers and/or esters are used to dissolve the modified polyester resin of the invention.

When the modified polyester resin is dissolved in an aqueous medium, usually also a neutralising agent is dissolved in the aqueous medium. Suitable neutralizing agents when the modified polyester resin is solved in water include but are not limited to dimethyl ethanol amine (DMEA), triethyl amine (TEA), aminomethyl propanol and tributyl amine. Butyl glycol is usually used as co-solvent.

Also mixtures of organic solvent and water may be used to disperse the modified polyester resin according to the invention.

Coating compositions comprising a modified polyester resin according to the invention are preferably cured with a crosslinking component such as a crosslink catalyst, a crosslink initiator or at least one crosslinker that reacts with the functional groups of the modified polyester resin or any combination thereof. Preferably the coating compositions comprising the modified polyester resin according to the invention are cured with a crosslinking component selected from the group consisting of crosslinker, crosslink catalyst, crosslink initiator and mixtures thereof.

Examples of suitable crosslink catalysts are cobalt, manganese, zinc, iron, and zirconium salts or any mixture thereof.

Examples of suitable crosslink initiators are methyethylketone peroxide, tertiary-butyl preoxybenzoate, benzoil peroxide or peroxyacetals.

Examples of suitable crosslinkers include compounds containing epoxy groups, compounds containing amino groups, compounds containing isocyanate groups, compounds containing phenoxy groups, compounds containing epoxyphosphate ester, a phenolic resin and/or hydroxyalkylamide groups or mixture of any of them. The crosslinker can be selected depending on the desired use.

Examples of suitable compounds containing epoxy groups are bisphenol A epoxy resins (for example Epikote 828 (TM), Epikote 1001(TM) and Epikote 1004 (TM) from Shell), hydrogenated bisphenol A epoxy compounds, aliphatic epoxy compounds, epoxidised alkyd resins, epoxidised oils (for example epoxidised linseed oil or soybean oil), epoxidised borates and triglycidyl isocyanurate. Preferably a bisphenol A epoxy resin, such as for example diglycidyl ether of bisphenol-A and/or oligomers thereof, is used as an epoxy group containing crosslinker.

Examples of suitable amino resin crosslinkers are benzoguanamine, melamine and urea-formaldehyde resins.

Examples of suitable phenolic crosslinkers are novolac resins, resoles and bisphenol A.

Examples of suitable crosslinkers containing (blocked) isocyanate groups are hexamethylene diisocyanate (HDI), toluene diisocyanate (TDI), isophorone diisocyanate (IPDI), tetramethylxylene diisoycanate (TMXDI), 3,4 isocyanatomethyl-1methyl-cyclohexylisocyanate (IMCI) and their dimers and trimers. Preferably these crosslinkers are blocked.

Suitable examples of commercially available β-hydroxyalkylamide compounds are for example N,N,N',N'-tetrakis-(2-hydroxyethyl)-adipamide (Primid XL-552 from EMS-Chemie AG) and N,N,N',N'-tetrakis-(2-hydroxypropyl)-adipamide (Primid QM 1260 from EMS-Chemie AG).

Another example of a suitable β-hydroxyalkylamide is a branched modified polyesteramide comprising at least two groups according to formula (III): 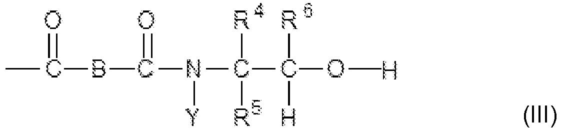 in which
Y= 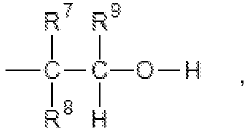 H, C₁ to C₂₄ (cyclo)alkyl or C₆ to C₁₀ aryl,
B = C₂ to C₂₄ optionally substituted aryl or (cyclo)alkyl aliphatic diradical and
R⁴, R⁵, R⁶, R⁷, R⁸ and R⁹ may, independently of one another, be the same or different,
H, C₆ to C₁₀ aryl and/or C₁ to C₈ (cyclo)alkyl radical.

A reaction accelerator may usually be used to enhance the curing process .The accelerator can be added to the resin at the end of the polycondensation process or during or after the resin is solved. Usually the liquid accelerator or accelerator solution is added into the coating composition comprising the modified polyester resin.

Suitable accelerator for acid-epoxy curing are described by Madec et al. in 'Kinetics and Mechanisms of Polyesterifications', Advances in Polymer Science, 182-198 (1985). Examples of suitable classes include N-dialkylamine pyridines, tertiary amines, imidazoles, guanidines, cyclic amines, quarternary ammonium and phosphonium salts and latent amine accelerators. The accelerators can be blocked if so desired.

Examples of suitable accelerators for curing an OH-functional modified polyester resin and an amino resin as a crosslinker include strong acids such as sulphonic acids, mono and dialkyl acid phosphate, butyl phosphate and butyl maleate.

Suitable sulphonic acids include for example paratoluene sulphonic acid, methane sulphonic acid, nonyl benzene sulphonic acid, dinonyl naphthalene disulphonic acid, dodecyl benzene sulphonic acid and dodecyl sulphonic acid.

Suitable accelerators for curing an OH-functional modified polyester resin and an isocyanate based crosslinker include, for example, dibutyltindilaureate and zinc octoate.

If any accelerators are present in the cure reaction, they are generally present in amounts of from 0 to 5 wt% relative to the modified polyester resin.

According to an embodiment of the invention the modified polyester resin is dispersed in a liquid medium to a concentration of at most 65 wt%, preferably at most 60 wt% of resin (solids content), optionally having the following properties:
- the modified polyester resin does not phase separate from the dispersion;
- the dispersion is clear as visualised by eye;
- the dispersion does not contain crystalline material;

Preferably the properties above are also present after at least 30 days of storage at ambient temperature.

According to an embodiment of the invention there is also provided a binder comprising at least a modified polyester resin according to the invention, optionally blended with one or more than one additional polymeric resins.

According to an embodiment of the invention there is also provided a coating composition comprising a modified polyester resin according to the invention, additionally also comprising at least one separate crosslinking component capable of reaction with the functional groups of the modified polyester resin. With separate crosslinking component is meant that the crosslinking component is chemically distinct from the modified polyester resin. It is within the scope of the invention to use at least one resin and at least one crosslinking component in the coating composition.

The properties of the final coating (after curing of the coating composition) strongly depend on the choice of modified polyester resins and crosslinking component.

The coating composition according to the invention may be 100% solid or water borne or solvent borne, depending on the liquid medium carrying the modified polyester resin of the invention. Preferably the coating composition is water borne or solvent borne.

In a preferred embodiment according to the invention there is provided a coating composition comprising:
i) 50 to 99 wt% of at least one modified polyester resin according to the invention; and
ii) 1 to 50 wt% of a crosslinking component selected from the group consisting of a crosslinker, a crosslink catalyst, a crosslink initiator and mixtures thereof.
More preferably component i) + ii) = 100 wt% of the total coating composition.

The composition of the invention may be combined with one or more than one additional polymeric resins. Combination may be by blending or an in situ preparation. Combination by blending may be by simple mixing under stirring or bringing the components together by an in-line mixing process.

These additional polymeric resins may have a monomodal or bimodal particle size distribution and may be a single phase, multiphase, seeded or oligomer supported polymer, or may be prepared by a power feed process. These additional polymeric resins may be self-crosslinking or pre-crosslinked.

These additional polymeric resins may be vinyl polymers, alkyd polymers, polyesters, epoxy polymers, fluorine containing polymer or other polyurethane and/or hybrids of any of the preceding polymers such as polyurethane/acrylics and uralkyds.

In another preferred embodiment according to the invention there is also provided a coating composition coating composition comprising:
i) 20 to 98 wt% of at least one modified polyester resin according to the invention;
ii) 1 to 50 wt% of a crosslinking component selected from the group consisting of crosslinker, a crosslink catalyst, a crosslink initiator and mixtures thereof; and
iii) 1 to 79 wt% of a liquid medium.

More preferably components i) + ii) + iii) = 100 wt% of the total coating composition.

The coating composition according to the invention may additionally include various additives includes conventional ingredients like pigments, dyes, wetting agents, dispersing and stabilising agents (usually surfactants or emulsifiers), rheology control agents, flow-promoting agents, extenders, defoaming agents, plasticisers, thickeners, heat stabilisers, levelling agents, anti-cratering agents, fillers, sedimentation inhibitors, UV absorbers, antioxidants, organic co-solvents, wetting agents, fungicides, bacteriocides, anti-freeze agents, coalescents, waxes and the like introduced at any stage of the production process or subsequently. It is possible to include an amount of antimony oxide in the coating composition to enhance the fire retardant properties.

There is according to the invention further provided a method of coating the surfaces of a substrate using a coating composition according to the invention. The compositions once applied may be allowed to dry naturally at ambient temperature, or the drying process may be accelerated by heat.

The coating composition of the invention may be applied to a variety of substrates including wood, board, metals, stone, concrete, glass, cloth, leather, paper, plastics, foam and the like, by any conventional method including brushing, dipping, flow coating, spraying, flexo printing, gravure printing, any other graphic arts application methods and the like. The liquid medium is removed by natural drying or by accelerated drying (by applying heat) to form a coating.

The invention also relates to a substrate, fully or partially coated with a coating obtainable by the process described above.

Accordingly, in a further embodiment of the invention there is provided a coating or a polymeric film obtained from a coating composition according to the invention applied onto a substrate.

The coating according to the invention may be used for thermoset applications. By thermoset herein is meant that the coating hardens or sets (i.e. it is cured) when heat, chemical reaction or irradiation is applied, and which, once set, cannot be re-softened or melted by re-heating because the polymer chains form a three dimensional network.

The composition of the current invention may for example be used, appropriately formulated if necessary, for the provision of films, including inter alia polishes, varnishes, lacquers, or paints. The composition of the current invention may also be used for the provision of inks or adhesives.

If added, organic solvent is preferably added during the preparation of the paint or other formulations mentioned above.

Coil coatings can be obtained via commonly known processes as described for example in Coil Coatings by Joseph E. Gaske (Federation of Societies for Coatings Technology, February 1987, pp. 7-19). Can coatings can be obtained via processes of the kind described in for example Organic Coatings--Science and Technology, Volume 2: Applications, Properties and Performance by Z. W. Wicks et al. (Wiley-Interscience, 1994, pp. 284-290).

The curing conditions and additives can be selected to depend on the desired peak metal temperature (PMT), on the desired application and the nature and thickness of the substrate. For conventional coil ovens the curing time will generally be between about 3 and about 70 seconds at temperatures of from 250 to 400 °C and a PMT of from 204 to 249 °C. For can coatings the curing time will generally lies between a few seconds and tens of minutes at temperatures of from 100 to 220 °C. Near infrared (NIR), infrared (IR) and ultraviolet (UV) radiation can be also used for curing both can and coil applications.

Suitable substrates include for example steel, tin-plated steel, chromium-plated steel and aluminium substrates.

The coil coatings according to the invention are suitable for use as primer as backing coat and as top coat and can for example be used as coatings for household equipment such as fridges, deepfreezes, microwave ovens, ovens and boilers.

The can coatings according to the invention are suitable for use as interior and exterior can coatings and can be used for example as coatings for beer cans, cans for other beverages, spray cans, can ends, tubes, drums, cigar boxes and food cans such as fish cans. They can be used in pigmented or in non-pigmented compositions.

The use of the exterior coating is important primarily from a decorative viewpoint, for giving the substrate a saleable appearance. It protects the metal from corrosion and the coating also serves as a label.

The interior coating is mainly intended on the one hand to protect the contents of the can against the influences of the metal and on the other to protect the metal against the contents of the can.

The invention will be elucidated with reference to the following, non-limiting examples. Unless otherwise specified all parts, percentages and ratios are on a weight basis. The term comparative (C) means that it is not according to the invention.

Parameters suitable to define the solubility of the modified polyester resin according to the invention in various liquid media are the crystallization tendency and the critical miscibility concentration. Both parameters were determined by visualization of the clarity of the modified polyester resin solution.

In the experiments presented herein a clear, transparent solution means good solubility of the resin in the corresponding solvent and lack of crystallisation; and a hazy solution means poor solubility of the resin.

By crystallization tendency of modified polyester resin in solution is herein meant the tendency of the modified polyester resin to crystallize out of solution at given temperature after given period of time.

The critical miscibility concentration of modified polyester resin in solution is the wt% solid content at ambient temperature, at which the resin mixed with the liquid medium still give a clear solution, without any sign of phase separation or any other non-homogeneity. By ambient temperature herein is meant a temperature in the range of from 10 to 30 °C and more preferably 17 to 23 °C.

Preferably, the critical miscibility concentration of modified polyester resin in solution is at most 65 wt% and more preferably at most 60 wt%, as determined by visualization, such that the polyester resin according to the invention mixed with the liquid medium still gives a clear solution. The advantage of having such critical miscibility concentration is for example that the solved modified polyester has a workable viscosity that is low enough to ensure optimal transportation of the solved resin. For this reason, from the logistic point of view the preferred supply (storage) form of the polyester resins according to the invention is in solution having 60% ± 5% solid content. Furthermore it is important that these resin solutions are stable at this concentration.

For a resin to dissolve in a liquid medium, the molecules of the liquid medium must overcome the intermolecular stickiness in the resin and find their way to penetrate between and around the resin molecules. At the same time, the molecules of the liquid medium themselves must be separated from each other by the molecules of the resin. This is accomplished best when the attractions between the molecules of both components are similar. If the attractions are sufficiently different, the strongly attracted molecules will cling together, excluding the weakly attracted molecules, and immiscibility (not able to be mixed) will result. Generally, if immiscibility or crystallisation occurred the solution became hazy or phase separation was observed. Resins that give clear solution at lower solid content have better acceptance towards the liquid medium (the lower the solid content of the resin the better the miscibility with the liquid medium).

### Example 1

(96.7 g) glycerol, (172.7g) 1,2-propylene glycol, (578.5 g) terephthalic acid, (56.1 g) ethylene glycol, (236.4 g) soybean fatty acid and (1.0 g) butyl stannoic acid (catalyst) were heated up in a glass reaction flask with a mechanical stirrer, a thermometer, and a distillation column under a nitrogen atmosphere. The mixture was heated slowly to 230 °C, while the water was distilled off. When the water distillation stopped, the reaction mixture was cooled down to 210 °C and a pressure of 50 mm Hg was applied until the acid number is lower than 7. Then the modified polyester resin was cooled down to 180 °C and (330 g) Solvent Naphtha 150 were added to obtain a homogeneous mixture. The obtained modified polyester resin had an acid value of 1.0 mg KOH/g, a hydroxyl value of 71 mg KOH/g, a Mn of 2,277 g/mol, a Mw of 10,884 g/mol and a Tg of 3 °C. The final solid content of the mixture was 74.9 %.

After 24 hours cooling at a temperature of 20 +/- 3 °C a clear, yellow, highly viscous solution (A1) was obtained.

In a glass jar (100 g) of the solution A1 was further diluted with Solvent Naphtha 150 (available from Exxon) at ambient temperature. A critical miscibility concentration of 31.5 % solid content was obtained.

In another glass jar (100 g) of the solution A1 was diluted with Solvent Naphtha 150 until 56.7 % solid content. The solution was kept for 30 day at ambient temperature. After this period the solution was still clear without any visual evidence of crystallization.

### Example 2

Example 2 was prepared according to the procedure of example 1, but using the following components instead: (32.4 g) glycerol, (249.5 g) 1,2-propylene glycol, (345.5 g) terephthalic acid, (315.9 g) isophthalic acid, (93.1 g) 12-hydroxystearic acid, (112.5 g) 1,4-cyclohexanedimethanol and (1.0 g) butyl stannoic acid.

The obtained modified polyester resin had an acid value of 2.4 mg KOH/g, a hydroxyl value of 45.4 mg KOH/g, a Mn of 4,283 g/mol, a Mw of 12,303 g/mol and a Tg of 40.1 °C. The final solid content of the mixture was 75.0 %.

After 24 hours cooling at a temperature of 20 +/- 3 °C a clear, yellow, highly viscous solution (A2) was obtained.

In a glass jar (100 g) of the solution A2 was further diluted with Solvent Naphtha 150 at ambient temperature. A critical miscibility concentration of 46.3 % solid content was obtained.

In another glass jar (100 g) of the solution A2 was diluted with Solvent Naphtha 150 until 60.7 % solid content. The solution was kept for 30 day at ambient temperature. After this period the solution was still clear without any visual evidence of crystallization.

### Example 3

Example 3 was prepared according to the procedure of example 1, but using the following components instead: (372.0 g) 1,2-propylene glycol, (526.0 g) terephthalic acid, (1.5 g) trimethylol propane, (175.4 g) isophthalic acid, (82.3 g) dimer fatty acid (Pripol 1017 available from Uniquema), and (1.0 g) butyl stannoic acid.

The obtained modified polyester resin has an acid value of 5.2 mg KOH/g, a hydroxyl value of 18.4 mg KOH/g, a Mn of 4,336 g/mol, a Mw of 9,968 g/mol and a Tg of 53.6 °C. The final solid content of the mixture was 75.0 %.

After 24 hours cooling at a temperature of 20 +/- 3 °C a clear, light brown, highly viscous solution (A3) was obtained.

In a glass jar (100 g) of the solution A3 was further diluted with Solvent Naphtha 150 at ambient temperature. A critical miscibility concentration of 42.9 % solid content was obtained.

In another glass jar (100 g) of the solution A3 was diluted with Solvent Naphtha 150 until 60.1 % solid content. The solution was kept for 30 day at ambient temperature. After this period the solution was still clear without any visual evidence of crystallization.

### Example 4

Example 4 was prepared according to the procedure of example 1, but using the following components instead: (400.1 g) 2-methyl-1,3-propanediol, (497.6 g) terephthalic acid, (1.5 g) trimethylol propane, (166.0 g) isophthalic acid, (84.0 g) dimer fatty acid (Pripol 1017) and (1.0 g) butyl stannoic acid.

The obtained modified polyester resin had an acid value of 3.2 mg KOH/g, a hydroxyl value of 16.8 mg KOH/g, a Mn of 5,290 g/mol, a Mw of 16,300 g/mol and a Tg of 29.3 °C The final solid content of the mixture is 75.1 %.

After 24 hours cooling at a temperature of 20 +/- 3 °C a clear, yellow, highly viscous solution (A4) was obtained.

In a glass jar (100 g) of the solution A4 was further diluted with Solvent Naphtha 150 at ambient temperature. A critical miscibility concentration of 45.0 % solid content was obtained.

In another glass jar (100 g) of the solution A4 was diluted with Solvent Naphtha 150 until 60.9 % solid content. The solution was kept for 30 day at ambient temperature. After this period the solution was still clear without any visual evidence of crystallization.

### Comparative example 1

Comparative example 1 was prepared according to the procedure of example 1, but using the following components instead: (394.0 g) 1.2-propylene glycol, (580.2 g) terephthalic acid, (193.4 g) isophthalic acid and (1.0 g) butyl stannoic acid.

The obtained modified polyester resin had an acid value of 6.2 mg KOH/g, a hydroxyl value of 17.4 mg KOH/g, a Mn of 3,727 g/mol, a Mw of 8,257 g/mol and a Tg of 69.3 °C. The final solid content of the solution was 74.7 %.

After 24 hours cooling at a temperature of 20 +/- 3 °C a clear, slightly yellow, highly viscous solution (C1) was obtained.

In a glass jar (100 g) of the solution C1 was further diluted with Solvent Naphtha 150 at ambient temperature. A critical miscibility concentration of 66.7 % solid content was obtained. The resulting resin solution was very viscous so further dilution was be needed to obtain a workable viscosity.

Phase separation occurred at 60 % solid content because of the poor miscibility of the modified polyester resin in the liquid medium.

### Comparative example 2

Comparative example 2 was prepared according to the procedure of example 1, but using the following components instead:
(427.6 g) 2-methyl-1,3-propanediol, (548.0 g) terephthalic acid,
(182.7 g) isophthalic acid and (1.0 g) butyl stannoic acid.

The obtained modified polyester resin had an acid value of 4.2 mg KOH/g, a hydroxyl value of 19.2 mg KOH/g, a Mn of 5,080 g/mol, a Mw of 16,800 g/mol and a Tg of 45 °C. The final solid content of the solution was 75.2 %.

After 24 hours cooling at a temperature of 20 +/- 3 °C a white, hazy, highly viscous solution (C2) was obtained. Further dilution with Solvent Naphtha 150 to 60 % solid content resulted in phase separation of the solution.

### Comparative example 3

Comparative example 3 was prepared according to the procedure of example 1, but using the following components instead: (462.9 g) neopentyl glycol, (514.2 g) terephthalic acid, (171.4 g) isophthalic acid and (1.0 g) butyl stannoic acid.

The obtained modified polyester resin had an acid value of 4.5 mg KOH/g, a hydroxyl value of 17.5 mg KOH/g, a Mn of 4,576 g/mol, a Mw of 10,476 g/mol and a Tg of 60.1 °C. The final solid content of the solution was 75.1 %.

After 24 hours cooling at a temperature of 20 +/- 3 °C a white solid wax-like substance (C3) was obtained. Because of the high crystallization tendency further dilution of C3 to 60 % solid content with Solvent Naphtha 150 at ambient temperature didn't have any effect (the resin kept its wax-like consistency).

### Comparative example 4

Comparative example 4 was prepared according to the procedure of example 1, but using the following components instead: (431.9 g) neopentyl glycol, (472.5 g) terephthalic acid, (157.5 g) isophthalic acid, (80.1 g) dimer fatty acid (Pripol 1017) and (1.0 g) butyl stannoic acid. The obtained polyester resin had an acid value of 3.8 mg KOH/g, a hydroxyl value of 18.6 mg KOH/g, a Mn of 4,297 g/mol, a Mw of 11,568 g/mol and a Tg of 44.1 °C. The final solid content of the resin was 75.1 %.

After 24 hours cooling at a temperature of 20 +/- 3 °C a white solid wax-like substance (C4) was obtained. Because of the high crystallization tendency further dilution of C4 to 60 % solid content with Solvent Naphtha 150 at ambient temperature didn't have any effect (the resin kept its wax-like consistency).

### Comparative example 5

Comparative examples 5 to 7 described below are modifications of example 1 with 5% D from US 5055548 (see procedure described in example 1 and the 5% D formulation in Table I). In these comparative examples the amount of TPA was varied while the amount of branching agent was kept higher than 10 wt%. Diacid 1595 dimer fatty acid was replaced with another dimer fatty acid, namely Pripol 1017 (since Diacid 1595 was not commercially available in Europe). This change did not affect the polyester resin solubility as any type of fatty acid described above in an amount according to the invention is expected to give the desired solubility properties.

Polyester resin with alkyd constant K = 1.010 containing
(260 g) trimethylol propane, (100.0 g) terephthalic acid, (200 g) phthalic acid anhydride, (56.2 g) dimer fatty acid (Pripol 1017), (461.5 g) sunflower oil fatty acid, (1.0 g) butyl stannoic acid and (30 g) xylene was prepared by azeothrope distillation . The raw materials were charged in 1 L glass reaction flask with a mechanical stirrer, a thermometer, a Dean-Stark trap and cold water condenser, in a nitrogen atmosphere. Following the reaction procedure of US 5055548, the mixture was heated to 175 °C under nitrogen and the temperature was increased 10 °C every 30 minutes until reaction temperature of 240 °C was reached. The temperature was intended to be maintained until the resin achieved acid value of about 10 mg KOH/g.

In 3h and 15 min the reaction temperature of 240 °C was reached and water was distilled of.

30 minutes later the viscosity of the resin started dramatically to increase and the resin turned into gel. The gelled resin was not further soluble.

### Comparative example 6

Resin with alkyd constant K = 1.008 containing (258.4 g) trimethylol propane, (161.6 g) terephthalic acid, (145.4 g) phthalic acid anhydride, (57.8 g) dimer fatty acid (Pripol 1017), (462.8 g) sunflower oil fatty acid (1.0 g) butyl stannoic acid and (30 g) xylene was prepared by azeothrope distillation. The raw materials were charged in 1 L glass reaction flask with a mechanical stirrer, a thermometer, a Dean-Stark trap and cold water condenser, in a nitrogen atmosphere. Following the reaction procedure of US 5055548, the mixture was heated to 175 °C under nitrogen and the temperature was increased 10 °C every 30 minutes until reaction temperature of 240 °C was reached. The temperature was intended to be maintained until the resin achieved acid value of about 10 mg KOH/g.

In 3h and 15min the reaction temperature of 240 °C was reached and water was distilled of. After 3h at 240 °C the resins seemed to became clear although on the glass of the flask there still crystals of unreacted TPA and acid value of 41.8 mg KOH/g was measured. A quarter of an hour later the viscosity of the obtained resin started dramatically to increase and the resin turned into gel. The gelled resin was not further soluble.

### Comparative example 7

Resin with alkyd constant K = 1.008 containing (257.7 g) trimethylol propane, (326.7 g) terephthalic acid, (57.6 g) dimer fatty acid (Pripol 1017), (461.7 g) sunflower oil fatty acid, (1.0 g) butyl stannoic acid and (30 g) xylene was prepared by azeotrope distillation. The raw materials were charged in 1 L glass reaction flask with a mechanical stirrer, a thermometer, a Dean-Stark trap and cold water condenser in a nitrogen atmosphere. Following the reaction procedure of US 5055548, the mixture was heated to 175 °C, under nitrogen and the temperature was increased 10 °C every 30 minutes until reaction temperature of 240 °C was reached. The temperature was intended to be maintained until the resin achieved acid value of about 10 mg KOH/g.

In 3h and 15 min the reaction temperature of 240 °C was reached and (15.0 g) water was distilled of. After 9h at 240 °C, (36 g) of water were distilled, the resins didn't seem to become clear and on the glass of the flask there still crystals of unreacted TPA. The viscosity of the obtained resin started dramatically to increase and the resin turned into gel. The gelled resin was not further soluble.

### Comparative example 8 (reproduction of Example H from US 5168028)

(370.5 g) 1,2-propylene glycol, (161.1 g) terephthalic acid, (238.7 g) maleic anhydride, (140.2 g) trimellitic acid anhydride and (207.2 g) stearic acid were heated up in a glass reaction flask with a mechanical stirrer, a thermometer and a distillation column in a nitrogen atmosphere. The mixture was heated slowly to 210 °C, while the water was distilled off. The intention was to keep the mixture for 7h at 210 °C as it was described in US 5168028. However, after 4h at 210 °C the resin turned into gel. The gelled resin was not further soluble.

### Comparative example 9 (reproduction of Example M from US 5168028)

(346.0 g) 1,2-propylene glycol, (226.6 g) terephthalic acid, (133.8 g) maleic anhydride, (218.4 g) trimellitic acid anhydride and (193.8 g) stearic acid were heated up in a glass reaction flask with a mechanical stirrer, a thermometer and a distillation column in a nitrogen atmosphere. The mixture was heated slowly to 210 °C, while the water was distilled off. The intention was to keep the mixture for 7h at 210 °C as it was described in US 5168028. However, after 7h at 210 °C less than 50 % of the reaction water was distilled of and the resin obtained was white due to the big amount of free (unreacted) terephthalic acid.

The above examples show that the disadvantages of terephthalic acid rich modified polyester resins discussed above, i.e. the bad solubility in the reaction medium during the synthesis of the polyester, the crystallisation tendency and poor solubility, were overcome by the modified polyester resin of the invention (see table 1 and 2 below). The examples have also shown that using 10 wt% or less of compound f) having functionality ≥ 3 in combination with ≥ 10 wt% TPA prevented the gel formation during the synthesis of the polyester resin. The addition of fatty acids improved not only the solubility but also increased the miscibility and solvent acceptance of the terephthalic acid rich modified polyester resin. This effect was especially pronounced when aromatic hydrocarbons were used.

**Table 1**

| Comp. | | E1 | E2 | E3 | E4 | C1 | C2 | C3 | C4 | C5 | C6 | C7 | C8 | C9 |
|---|---|---|---|---|---|---|---|---|---|---|---|---|---|---|
| a | Terephthalic acid | 578.50 | 345.50 | 526.00 | 497.60 | 580.20 | 548.00 | 514.20 | 472.50 | 100.00 | 161.60 | 326.70 | 161.60 | 226.60 |
| | Phthalic acid anhydride | - | - | - | - | - | - | - | - | 200.00 | 145.60 | - | - | - |
| | Maliec acid anhydride | - | - | - | - | - | - | - | - | - | - | - | 238.70 | 133.80 |
| b | Isophthalic aicd | - | 315.90 | 175.40 | 166.00 | 193.40 | 182.70 | 171.40 | 157.50 | - | - | - | - | - |
| | 1,2-propylene glycol | 172.70 | 249.50 | 372.00 | - | 394.00 | - | - | - | - | - | - | 370.50 | 346.00 |
| c | 2-methyl-1,3- propanediol | - | - | - | 400.10 | - | 427.60 | - | - | - | - | - | - | - |
| | Cyclohexanedimethanol | - | 112.50 | - | - | - | - | - | - | - | - | - | - | - |
| | Ethylene glycol | 56.10 | - | - | - | - | - | - | - | - | - | - | - | - |
| d | Neopentyl glycol | - | - | - | - | - | - | 462.90 | 431.90 | - | - | - | - | - |
| | Trimelitic acid anhydride | - | - | - | - | - | - | - | - | - | - | - | 140.20 | 218.40 |
| | Glycerol | 96.70 | 32.40 | - | - | - | - | - | - | - | - | - | - | - |
| f | Trimethylolpropane | - | - | 1.50 | 1.50 | - | - | - | - | 260.00 | 258.40 | 257.70 | - | - |
| | Soybeen fatty acid | 236.40 | - | - | - | - | - | - | - | - | - | - | - | - |
| | Sunflower fatty acid | - | - | - | - | - | - | - | - | 461.50 | 462.80 | 461.70 | - | - |
| | Hydroxystearic acid | - | 93.10 | - | - | - | - | - | - | - | - | - | - | - |
| | Dimer fatty acid (Pripol 1017) | - | - | 82.30 | 84.00 | - | - | - | 80.10 | 56.20 | 57.80 | 57.60 | - | - |
| e | Stearic acid | - | - | - | - | - | - | - | - | - | - | - | 207.20 | 193.80 |
| | butyl stannoic acid | 1.00 | 1.00 | 1.00 | 1.00 | 1.00 | 1.00 | 1.00 | 1.00 | 1.00 | 1.00 | 1.00 | - | - |
| | Xylene | - | - | - | - | - | - | - | - | 30.00 | 30.00 | 30.00 | - | - |
| | Total | 1140.60 | 1148.90 | 1157.10 | 1149.00 | 1167.60 | 1158.30 | 1148.60 | 1143.00 | 1108.70 | 1086.10 | 110.37 | 1118.20 | 1118.60 |
| | Destilled water | 140.60 | 148.90 | 157.10 | 149.00 | 167.60 | 158.30 | 148.60 | 143.00 | 77.70 | 86.10 | 10.37 | 118.20 | 118.60 |
| | Total resin | 1000.00 | 1000.00 | 1000.00 | 1000.00 | 1000.00 | 1000.00 | 1000.00 | 1000.00 | 1000.00 | 1000.00 | 1000.00 | 1000.00 | 1000.00 |

**Table 2**

| Properties | E1 | E2 | E3 | E4 | C1 | C2 | C3 | C4 | C5 | C6 | C7 | C8 | C9 |
|---|---|---|---|---|---|---|---|---|---|---|---|---|---|
| AV, mg KOH/g | 1.0 | 2.4 | 5.2 | 3.2 | 6.2 | 4.2 | 4.5 | 3.8 | n.d | n.d | n.d | n.d | n.d |
| OH, mg KOH/g | 71.0 | 45.4 | 18.4 | 16.8 | 17.4 | 19.2 | 17.5 | 18.6 | n.d | n.d | n.d | n.d | n.d |
| Tg,°C | 3.0 | 40.1 | 53.6 | 29.3 | 69.3 | 45.0 | 60.1 | 44.1 | n.d | n.d | n.d | n.d | n.d |
| Mn, g/mol | 2877 | 4283 | 4336 | 5290 | 3727 | 5080 | 4576 | 4297 | n.d | n.d | n.d | n.d | n.d |
| Mw, g/mol | 10884 | 12303 | 9968 | 16300 | 8257 | 16800 | 10476 | 11568 | n.d | n.d | n.d | n.d | n.d |
| Appearance 100% solid resin | good | good | good | good | good | good | good | good | gel | gel | gel | gel | White due to crystals of free TPA |
| Critical misc. concentration, % solid content | 31.5 | 42.9 | 46.3 | 45.0 | 66.7 | >75 | >75 | >75 | N/A | N/A | N/A | N/A | N/A |
| Appearance of the solution at 60% solid content | clear | clear | clear | clear | turbid phase separation | turbid phase separation | wax | wax | N/A | N/A | N/A | N/A | N/A |
| Stability of the solution (60% solid content) after 30 days at ambient temperature | Ok | Ok | Ok | Ok | N/A | N/A | N/A | N/A | N/A | N/A | N/A | N/A | N/A |

| | | | | | | | | | | | | | |
|---|---|---|---|---|---|---|---|---|---|---|---|---|---|
| N/A = not applicable n.d = not determine | | | | | | | | | | | | | |

## Claims

1. A modified polyester resin obtained by the reaction of components comprising:
a) ≥ 10 wt% of at least one difunctional acid selected from the group consisting of terephthalic acid, terephthalic acid derivative and mixtures thereof;
b) 0 to 30 wt% of difunctional acids other than a);
c) ≥ 10 wt% of at least one difunctional alcohol containing at least a three substituted carbon atom (C') and another one hydrogen atom ('difunctional asymmetric alcohol');
d) 0 to 30 wt% of at least one difunctional alcohol other than c);
e) 8 to 25 wt% of at least one fatty acid and/or fatty acid derivative;
f) 0.1 to 10 wt% of at least one polyol and/or a polyacid and/or their corresponding anhydride, having a functionality ≥ 3;
g) 0 to 20 wt% of at least one monofunctional component selected from the group consisting of acid, epoxy, alcohol and mixtures thereof,
wherein the modified polyester resin has:
- a weight average molecular weight as determined by using gel permeation chromatography using polystyrene as standards and THF as solvent, of from 1,000 to 100,000 g/mol; and
- a glass transition temperature as determined via Differential Scanning Calorimetry at a heating rate of 5°C/min, of at least -50 and of at most 100 °C.

2. The modified polyester resin according to claim 1 that when the modified polyester resin is mixed with Solvent Naptha 150 in a temperature range of from 17 to 23 °C, the modified polyester resin has a critical miscibility concentration of at most 65 % in this temperature range.

3. The modified polyester resin according to any one of claims 1 to 2 that when the modified polyester resin is mixed with Solvent Naptha 150 in a temperature range of from 17 to 23 °C, the modified polyester resin has a critical miscibility concentration of at most 60 % in this temperature range.

4. The modified polyester resin according to any one of the preceding claims wherein the modified polyester resin has a weight average molecular weight of from 1,000 to 50,000 g/mol.

5. The modified polyester resin according to any one of claims 1 to 3 wherein the modified polyester resin has a weight average molecular weight of from 1,000 to 20,000 g/mol.

6. The modified polyester resin according to any one of the preceding claims wherein the modified polyester resin has an acid value of from 0 to 150 mg KOH/g.

7. The modified polyester resin according to any one of claims 1 to 5 wherein the modified polyester resin has an acid value of from 0 to 100 mg KOH/g.

8. The modified polyester resin according to any one of claims 1 to 5 wherein the modified polyester resin has an acid value of from 0 to 75 mg KOH/g.

9. The modified polyester resin according to any one of claims 1 to 5 wherein the modified polyester resin has an acid value of from 2 to 75 mg KOH/g.

10. The modified polyester resin according to any one of claims 1 to 9 wherein the modified polyester resin has a hydroxyl value of from 2 to 250 mg KOH/g.

11. The modified polyester resin according to any one of claims 1 to 9 wherein the modified polyester resin has a hydroxyl value of from 2 to 150 mg KOH/g.

12. The modified polyester resin according to any one of claims 1 to 9 wherein the modified polyester resin has a hydroxyl value of from 2 to 100 mg KOH/g.

13. The modified polyester resin according to any one of claims 1 to 9 wherein the modified polyester resin has a hydroxyl value of from 15 to 100 mg KOH/g.

14. The modified polyester resin according to any one of the preceding claims wherein the at least one fatty acid and/or fatty acid derivative has from C₁₀ to C₃₆ carbon atoms.

15. The modified polyester resin according to any one of claims 1 to 13 wherein the at least one fatty acid and/or fatty acid derivative has from C₁₂ to C₃₆ carbon atoms.

16. The modified polyester resin according to any one of the preceding claims wherein the modified polyester resin has a glass transition temperature of from 0 to 100 °C.

17. The modified polyester resin according to any one of the preceding claims wherein the modified polyester resin has a number average molecular weight as determined by using gel permeation chromatography using polystyrene as standards and THF as solvent, of from 1,000 to 10,000 g/mol.

18. The modified polyester resin according to any one of claims 1 to 16 wherein the modified polyester resin has a number average molecular weight as determined by using gel permeation chromatography using polystyrene as standards and THF as solvent, of from 2,000 to 8,000 g/mol.

19. The modified polyester resin according to any one of the preceding claims wherein component c) is ≥ 50 wt% of components c) and d) together.

20. The modified polyester resin according to any one of the preceding claims wherein the difunctional asymmetric alcohol is according to formula (I) and/or (II): 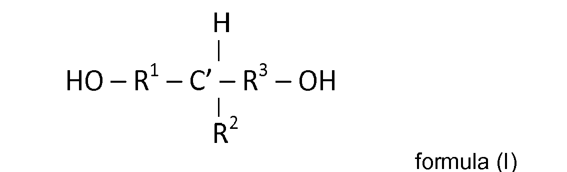 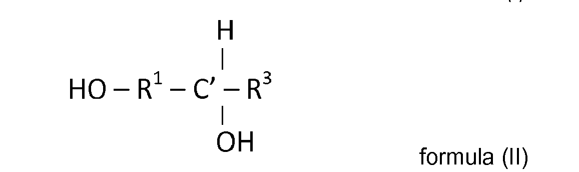 where R¹, R², R³ may, independently of one another, be the same or different C₁ to C₂₀ alkyl or a cycloalkyl.

21. The modified polyester resin according to any one of the preceding claims wherein the difunctional asymmetric alcohol is an aliphatic glycol selected from the group consisting of 1,2-propylene glycol, 2-methyl-1,3-propanediol, 1,2-butanediol, 1,3-butanediol, 2,2,4-trimethyl -1,3-pentanediol, 3-methyl-1,5 pentanediol and mixtures thereof.

22. The modified polyester resin according to any one of the preceding claims wherein the modified polyester resin comprises ≥ 35 wt% of component a) from the total difunctional acid content a) + b).

23. The modified polyester resin according to any one of the preceding claims wherein the modified polyester resin comprises ≥ 50 wt% of component a) from the total difunctional acid content a) + b).

24. The modified polyester resin according to any one of the preceding claims wherein component a) is ≤ 80 wt%.

25. The modified polyester resin according to any one of the preceding claims wherein the functionality of the component f) is selected from the group consisting of -OH, -NH₂ and -COOH and mixtures thereof.

26. A binder comprising a modified polyester resin according to any one of claims 1 to 25 and at least one polymeric resin.

27. A process for producing a modified polyester resin according to any one of claims 1 to 25, comprising a polycondensation reaction performed in a single step or multiple steps, in any order of addition of the components of the modified polyester resin.

28. A coating composition comprising a modified polyester according to any one of the claims 1 to 25 and a crosslinker.

29. A coating composition according to claim 28 further comprising a liquid medium.

30. A coating composition according to any one of claims 28 to 29 further comprising one or both of a crosslink catalyst and a crosslink initiator.

31. A method for coating a substrate with a coating composition according to any one of claims 28 to 30, comprising coating the substrate with the coating composition and applying heat to form a coating.

32. A thermoset coating obtained from a coating composition according to any one of claims 28 to 30.

33. A substrate and/or article, fully or partially coated with a coating composition according to any one of claims 28 to 30.

34. A substrate coated with a thermoset coating obtained from a coating composition according to any one of claims 28 to 30.

35. Use of:
- a modified polyester resin according to any one of claims 1 to 25; or
- a composition comprising a modified polyester resin according to any one of claims 1 to 25,
in thermoset applications.

## Patentansprüche

1. Modifiziertes Polyesterharz, erhalten durch die Reaktion von Komponenten, umfassend:
a) ≥ 10 Gew.-% mindestens einer difunktionellen Säure aus der Gruppe bestehend aus Terephthalsäure, Terephthalsäurederivat und Mischungen davon;
b) 0 bis 30 Gew.-% difunktionelle Säuren, die von a) verschieden sind;
c) ≥ 10 Gew.-% mindestens eines difunktionellen Alkohols mit mindestens einem dreifach substituierten Kohlenstoffatom (C') und einem weiteren Wasserstoffatom ("difunktioneller asymmetrischer Alkohol");
d) 0 bis 30 Gew.-% mindestens eines difunktionellen Alkohols, der von c) verschieden ist;
e) 8 bis 25 Gew.-% mindestens einer Fettsäure und/oder mindestens eines Fettsäurederivats;
f) 0,1 bis 10 Gew.-% mindestens eines Polyols und/oder mindestens einer Polysäure und/oder mindestens eines entsprechenden Anhydrids davon mit einer Funktionalität ≥ 3;
g) 0 bis 20 Gew.-% mindestens einer monofunktionellen Komponente aus der Gruppe bestehend aus Säure, Epoxid, Alkohol und Mischungen davon,
wobei das modifizierte Polyesterharz:
- ein gewichtsmittleres Molekulargewicht gemäß Bestimmung durch Gelpermeationschromatographie unter Verwendung von Polystyrol als Standards und THF als Lösungsmittel von 1,000 bis 100,000 g/mol und
- eine Glasübergangstemperatur gemäß Bestimmung mittels Differentialkalorimetrie (Differential Scanning Calorimetry) mit einer Heizrate von 5°C/min von mindestens -50 und höchstens 100°C aufweist.

2. Modifiziertes Polyesterharz nach Anspruch 1, wobei das modifizierte Polyesterharz beim Mischen mit Solvent Naphtha 150 in einem Temperaturbereich von 17 bis 23°C eine kritische Mischbarkeitskonzentration von höchstens 65% in diesem Temperaturbereich aufweist.

3. Modifiziertes Polyesterharz nach Anspruch 1 oder 2, wobei das modifizierte Polyesterharz beim Mischen mit Solvent Naphtha 150 in einem Temperaturbereich von 17 bis 23°C eine kritische Mischbarkeitskonzentration von höchstens 60% in diesem Temperaturbereich aufweist.

4. Modifiziertes Polyesterharz nach einem der vorhergehenden Ansprüche, wobei das modifizierte Polyesterharz ein gewichtsmittleres Molekulargewicht von 1,000 bis 50,000 g/mol aufweist.

5. Modifiziertes Polyesterharz nach einem der Ansprüche 1 bis 3, wobei das modifizierte Polyesterharz ein gewichtsmittleres Molekulargewicht von 1,000 bis 20,000 g/mol aufweist.

6. Modifiziertes Polyesterharz nach einem der vorhergehenden Ansprüche, wobei das modifizierte Polyesterharz eine Säurezahl von 0 bis 150 mg KOH/g aufweist.

7. Modifiziertes Polyesterharz nach einem der Ansprüche 1 bis 5, wobei das modifizierte Polyesterharz eine Säurezahl von 0 bis 100 mg KOH/g aufweist.

8. Modifiziertes Polyesterharz nach einem der Ansprüche 1 bis 5, wobei das modifizierte Polyesterharz eine Säurezahl von 0 bis 75 mg KOH/g aufweist.

9. Modifiziertes Polyesterharz nach einem der Ansprüche 1 bis 5, wobei das modifizierte Polyesterharz eine Säurezahl von 2 bis 75 mg KOH/g aufweist.

10. Modifiziertes Polyesterharz nach einem der Ansprüche 1 bis 9, wobei das modifizierte Polyesterharz eine Hydroxylzahl von 2 bis 250 mg KOH/g aufweist.

11. Modifiziertes Polyesterharz nach einem der Ansprüche 1 bis 9, wobei das modifizierte Polyesterharz eine Hydroxylzahl von 2 bis 150 mg KOH/g aufweist.

12. Modifiziertes Polyesterharz nach einem der Ansprüche 1 bis 9, wobei das modifizierte Polyesterharz eine Hydroxylzahl von 2 bis 100 mg KOH/g aufweist.

13. Modifiziertes Polyesterharz nach einem der Ansprüche 1 bis 9, wobei das modifizierte Polyesterharz eine Hydroxylzahl von 15 bis 100 mg KOH/g aufweist.

14. Modifiziertes Polyesterharz nach einem der vorhergehenden Ansprüche, wobei die mindestens eine Fettsäure und/oder das mindestens eine Fettsäurederivat C₁₀ bis C₃₆ Kohlenstoffatome aufweist.

15. Modifiziertes Polyesterharz nach einem der Ansprüche 1 bis 13, wobei die mindestens eine Fettsäure und/oder das mindestens eine Fettsäurederivat C₁₂ bis C₃₆ Kohlenstoffatome aufweist.

16. Modifiziertes Polyesterharz nach einem der vorhergehenden Ansprüche, wobei das modifizierte Polyesterharz eine Glasübergangstemperatur von 0 bis 100°C aufweist.

17. Modifiziertes Polyesterharz nach einem der vorhergehenden Ansprüche, wobei das modifizierte Polyesterharz ein zahlenmittleres Molekulargewicht gemäß Bestimmung durch Gelpermeationschromatographie unter Verwendung von Polystyrol als Standards und THF als Lösungsmittel von 1,000 bis 10,000 g/mol aufweist.

18. Modifiziertes Polyesterharz nach einem der Ansprüche 1 bis 16, wobei das modifizierte Polyesterharz ein zahlenmittleres Molekulargewicht gemäß Bestimmung durch Gelpermeationschromatographie unter Verwendung von Polystyrol als Standards und THF als Lösungsmittel von 2,000 bis 8,000 g/mol aufweist.

19. Modifiziertes Polyesterharz nach einem der vorhergehenden Ansprüche, wobei die Komponente c) ≥ 50 Gew.-% der Komponenten c) und d) zusammen ausmacht.

20. Modifiziertes Polyesterharz nach einem der vorhergehenden Ansprüche, wobei der difunktionelle asymmetrische Alkohol der Formel (I) und/oder (II) entspricht: 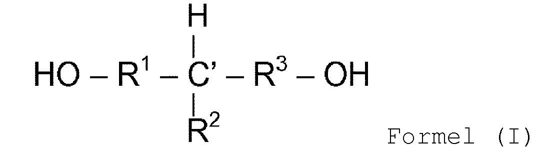 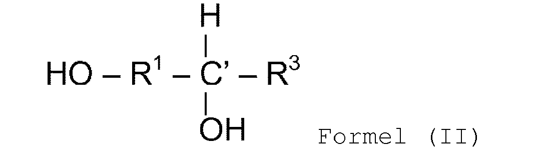 wobei R¹, R², R³ unabhängig voneinander gleiches oder verschiedenes C₁- bis C₂₀-Alkyl oder ein Cycloalkyl sein können.

21. Modifiziertes Polyesterharz nach einem der vorhergehenden Ansprüche, wobei es sich bei dem difunktionellen asymmetrischen Alkohol um ein aliphatisches Glykol aus der Gruppe bestehend aus 1,2-Propylenglykol, 2-Methyl-1,3-propandiol, 1,2-Butandiol, 1,3-Butandiol, 2,2,4-Trimethyl-1,3-pentandiol, 3-Methyl-1,5-pentandiol und Mischungen davon handelt.

22. Modifiziertes Polyesterharz nach einem der vorhergehenden Ansprüche, wobei das modifizierte Polyesterharz ≥ 35 Gew.-% Komponente a) des Gesamtgehalts an difunktioneller Säure a) + b) umfasst.

23. Modifiziertes Polyesterharz nach einem der vorhergehenden Ansprüche, wobei das modifizierte Polyesterharz ≥ 50 Gew.-% Komponente a) des Gesamtgehalts an difunktioneller Säure a) + b) umfasst.

24. Modifiziertes Polyesterharz nach einem der vorhergehenden Ansprüche, wobei Komponente a) ≤ 80 Gew.-% ausmacht.

25. Modifiziertes Polyesterharz nach einem der vorhergehenden Ansprüche, wobei die Funktionalität der Komponente f) aus der Gruppe bestehend aus -OH, -NH₂ und -COOH und Mischungen davon ausgewählt ist.

26. Bindemittel, umfassend ein modifiziertes Polyesterharz nach einem der Ansprüche 1 bis 25 und mindestens ein Polymerharz.

27. Verfahren zur Herstellung eines modifizierten Polyesterharzes nach einem der Ansprüche 1 bis 25, umfassend eine in einem Schritt oder in mehreren Schritten in einer beliebigen Reihenfolge der Zugabe der Komponenten des modifizierten Polyesterharzes durchgeführte Polykondensationsreaktion.

28. Beschichtungszusammensetzung, umfassend einen modifizierten Polyester nach einem der Ansprüche 1 bis 25 und einen Vernetzer.

29. Beschichtungszusammensetzung nach Anspruch 28, ferner umfassend ein flüssiges Medium.

30. Beschichtungszusammensetzung nach einem der Ansprüche 28 bis 29, ferner umfassend einen Vernetzungskatalysator und/oder einen Vernetzungsinitiator.

31. Verfahren zum Beschichten eines Substrats mit einer Beschichtungszusammensetzung nach einem der Ansprüche 28 bis 30, umfassend das Beschichten des Substrats mit der Beschichtungszusammensetzung und das Anwenden von Wärme zur Bildung einer Beschichtung.

32. Duroplastische Beschichtung, erhalten aus einer Beschichtungszusammensetzung nach einem der Ansprüche 28 bis 30.

33. Substrat und/oder Artikel, das bzw. der vollständig oder teilweise mit einer Beschichtungszusammensetzung nach einem der Ansprüche 28 bis 30 beschichtet ist.

34. Substrat, das mit einer aus einer Beschichtungszusammensetzung nach einem der Ansprüche 28 bis 30 erhaltenen duroplastischen Beschichtung beschichtet ist.

35. Verwendung von:
- einem modifizierten Polyesterharz nach einem der Ansprüche 1 bis 25 oder
- einer Zusammensetzung, die ein modifiziertes Polyesterharz nach einem der Ansprüche 1 bis 25 umfasst,
bei Duroplastanwendungen.

## Revendications

1. Résine de polyester modifiée obtenue par la réaction de composants comprenant :
a) ≥ 10 % en poids d'au moins un acide difonctionnel choisi dans le groupe constitué par l'acide téréphtalique, un dérivé d'acide téréphtalique et les mélanges de ceux-ci ;
b) 0 à 30 % en poids d'acides difonctionnels différents de a) ;
c) ≥ 10 % en poids d'au moins un alcool difonctionnel contenant au moins un atome de carbone substitué trois fois (C') et un autre atome d'hydrogène ('alcool difonctionnel asymétrique') ;
d) 0 à 30 % en poids d'au moins un alcool difonctionnel différent de c) ;
e) 8 à 25 % en poids d'au moins un acide gras et/ou dérivé d'acide gras ;
f) 0,1 à 10 % en poids d'au moins un polyol et/ou un polyacide et/ou leur anhydride correspondant, ayant une fonctionnalité ≥ 3 ;
g) 0 à 20 % en poids d'au moins un composant monofonctionnel choisi dans le groupe constitué par un acide, un époxyde, un alcool et les mélanges de ceux-ci,
la résine de polyester modifiée ayant :
- un poids moléculaire moyen en poids, tel que déterminé en utilisant la chromatographie par perméation de gel en employant du polystyrène comme étalons et du THF comme solvant, de 1,000 à 100,000 g/mol ; et
- une température de transition vitreuse, telle que déterminée par calorimétrie différentielle à balayage à une vitesse de chauffage de 5 °C/min, d'au moins -50 et au maximum de 100 °C.

2. Résine de polyester modifiée selon la revendication 1, la résine de polyester modifiée ayant, quand la résine de polyester modifiée est mélangée avec du solvant naphta 150 dans une fourchette de température de 17 à 23 °C, une concentration de miscibilité critique au maximum de 65 % dans cette fourchette de température.

3. Résine de polyester modifiée selon l'une quelconque des revendications 1 à 2, la résine de polyester modifiée ayant, quand la résine de polyester modifiée est mélangée avec du solvant naphta 150 dans une fourchette de température de 17 à 23 °C, une concentration de miscibilité critique au maximum de 60 % dans cette fourchette de température.

4. Résine de polyester modifiée selon l'une quelconque des revendications précédentes, la résine de polyester modifiée ayant un poids moléculaire moyen en poids de 1,000 à 50,000 g/mol.

5. Résine de polyester modifiée selon l'une quelconque des revendications 1 à 3, la résine de polyester modifiée ayant un poids moléculaire moyen en poids de 1,000 à 20,000 g/mol.

6. Résine de polyester modifiée selon l'une quelconque des revendications précédentes, la résine de polyester modifiée ayant un indice d'acide de 0 à 150 mg KOH/g.

7. Résine de polyester modifiée selon l'une quelconque des revendications 1 à 5, la résine de polyester modifiée ayant un indice d'acide de 0 à 100 mg KOH/g.

8. Résine de polyester modifiée selon l'une quelconque des revendications 1 à 5, la résine de polyester modifiée ayant un indice d'acide de 0 à 75 mg KOH/g.

9. Résine de polyester modifiée selon l'une quelconque des revendications 1 à 5, la résine de polyester modifiée ayant un indice d'acide de 2 à 75 mg KOH/g.

10. Résine de polyester modifiée selon l'une quelconque des revendications 1 à 9, la résine de polyester modifiée ayant un indice d'hydroxyle de 2 à 250 mg KOH/g.

11. Résine de polyester modifiée selon l'une quelconque des revendications 1 à 9, la résine de polyester modifiée ayant un indice d'hydroxyle de 2 à 150 mg KOH/g.

12. Résine de polyester modifiée selon l'une quelconque des revendications 1 à 9, la résine de polyester modifiée ayant un indice d'hydroxyle de 2 à 100 mg KOH/g.

13. Résine de polyester modifiée selon l'une quelconque des revendications 1 à 9, la résine de polyester modifiée ayant un indice d'hydroxyle de 15 à 100 mg KOH/g.

14. Résine de polyester modifiée selon l'une quelconque des revendications précédentes dans laquelle l'au moins un acide gras et/ou dérivé d'acide gras a de C₁₀ à C₃₆ atomes de carbone.

15. Résine de polyester modifiée selon l'une quelconque des revendications 1 à 13 dans laquelle l'au moins un acide gras et/ou dérivé d'acides gras a de C₁₂ à C₃₆ atomes de carbone.

16. Résine de polyester modifiée selon l'une quelconque des revendications précédentes, la résine de polyester modifiée ayant une température de transition vitreuse de 0 à 100 °C.

17. Résine de polyester modifiée selon l'une quelconque des revendications précédentes, la résine de polyester modifiée ayant un poids moléculaire moyen en nombre, tel que déterminé en utilisant la chromatographie par perméation de gel en employant du polystyrène comme étalons et du THF comme solvant, de 1,000 à 10,000 g/mol.

18. Résine de polyester modifiée selon l'une quelconque des revendications 1 à 16, la résine de polyester modifiée ayant un poids moléculaire moyen en nombre, tel que déterminé en utilisant la chromatographie par perméation de gel en employant du polystyrène comme étalons et du THF comme solvant, de 2,000 à 8,000 g/mol.

19. Résine de polyester modifiée selon l'une quelconque des revendications précédentes dans laquelle le composant c) représente ≥ 50 % en poids des composants c) et d) combinés.

20. Résine de polyester modifiée selon l'une quelconque des revendications précédentes dans laquelle l'alcool difonctionnel asymétrique répond à la formule (I) et/ou (II) : 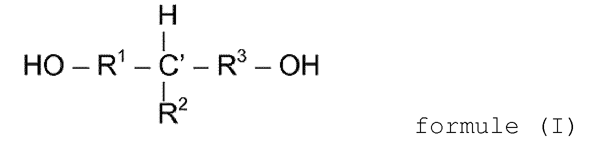 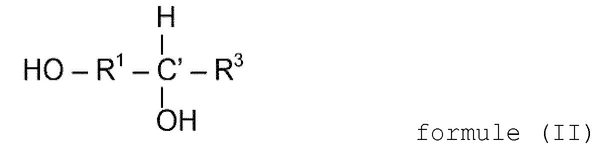 où R¹, R² et R³ peuvent, indépendamment les uns des autres, représenter un groupe alkyle en C₁ à C₂₀ ou cycloalkyle identique ou différent.

21. Résine de polyester modifiée selon l'une quelconque des revendications précédentes dans laquelle l'alcool difonctionnel asymétrique est un glycol aliphatique choisi dans le groupe constitué par le 1,2-propylène glycol, le 2-méthyl-1,3-propanediol, le 1,2-butanediol, le 1,3-butanediol, le 2,2,4-triméthyl-1,3-pentanediol, le 3-méthyl-1,5-pentanediol et les mélanges de ceux-ci.

22. Résine de polyester modifiée selon l'une quelconque des revendications précédentes, la résine de polyester modifiée comprenant ≥ 35 % en poids de composant a) sur la teneur totale en acides difonctionnels a) +b) .

23. Résine de polyester modifiée selon l'une quelconque des revendications précédentes, la résine de polyester modifiée comprenant ≥ 50 % en poids de composant a) sur la teneur totale en acides difonctionnels a)+b).

24. Résine de polyester modifiée selon l'une quelconque des revendications précédentes dans laquelle le composant a) représente ≤ 80 % en poids.

25. Résine de polyester modifiée selon l'une quelconque des revendications précédentes dans laquelle la fonctionnalité du composant f) est choisie dans le groupe constitué par -OH, -NH₂ et -COOH, et les mélanges de ceux-ci.

26. Liant comprenant une résine de polyester modifiée selon l' une quelconque des revendications 1 à 25 et au moins une résine polymère.

27. Procédé de production d'une résine de polyester modifiée selon l'une quelconque des revendications 1 à 25, comprenant une réaction de polycondensation effectuée en une seule étape ou de multiples étapes, dans n'importe quel ordre d'addition des composants de la résine de polyester modifiée.

28. Composition de revêtement comprenant une résine de polyester modifiée selon l'une quelconque des revendications 1 à 25 et un agent de réticulation.

29. Composition de revêtement selon la revendication 28 comprenant en outre un milieu liquide.

30. Composition de revêtement selon l'une quelconque des revendications 28 à 29 comprenant en outre un catalyseur de réticulation et/ou un initiateur de réticulation.

31. Procédé de revêtement d'un substrat avec une composition de revêtement selon l'une quelconque des revendications 28 à 30, comprenant le revêtement du substrat avec la composition de revêtement et l'application de chaleur pour former un revêtement.

32. Revêtement thermodurci obtenu à partir d'une composition de revêtement selon l'une quelconque des revendications 28 à 30.

33. Substrat et/ou article, totalement ou partiellement recouverts d'une composition de revêtement selon l'une quelconque des revendications 28 à 30.

34. Substrat recouvert d'un revêtement thermodurci obtenu à partir d'une composition de revêtement selon l'une quelconque des revendications 28 à 30.

35. Utilisation :
- d'une résine de polyester modifiée selon l'une quelconque des revendications 1 à 25 ; ou
- d'une composition comprenant une résine de polyester modifiée selon l'une quelconque des revendications 1 à 25,
dans des applications thermodurcies.
